# EUROPEAN PATENT APPLICATION

(11) **EP 4 730 821 A1**
(43) Date of publication of application: **22.04.2026**
(21) Application number: 24822759.7
(22) Date of filing: 13.06.2024
(51) Int. Cl.: H04N 21/482, H04N 21/488, H04N 21/4788, H04N 21/431, G06F 9/451, G06F 3/0481

(54) **MEDIA CONTENT PROCESSING METHOD AND APPARATUS, DEVICE, READABLE STORAGE MEDIUM, AND PRODUCT**

(30) Priority: 13.06.2023 CN 202310702725
(71) Applicant: Beijing Zitiao Network Technology Co., Ltd., Beijing 100190 (CN)
(72) Inventor: LI, Zhenan, Beijing 100028 (CN); ZHANG, Nuomeng, Beijing 100028 (CN); JIANG, Zhen, Beijing 100028 (CN); LI, Jia, Beijing 100028 (CN)
(74) Representative: Isarpatent
(86) International application number: PCT/CN2024/099089
(87) International publication number: WO 2024/255811

(57) **Abstract**

The embodiment of the disclosure provides a media content processing method and device, equipment, a readable storage medium and a product. The method includes: obtaining, in response to a media content generation operation triggered by a first user, media content generated by the first user and associated content corresponding to the media content; obtaining, in response to a preconfigured trigger condition being satisfied, a target interaction theme corresponding to the associated content, the target interaction theme being associated with a preset interaction operation; adding an interaction control corresponding to the target interaction theme in the media content picture to generate interaction media content; and posting the interaction media content to enable a second user to perform the preset interaction operation based on the interaction control in the posted interaction media content to post media content associated with the target interaction theme.

## Description

This application claims the benefit of Chinese Patent Application No. 2023107027254, entitled "method, apparatus, device, readable storage medium, and product for media content processing" filed June 13, 2023, the entire content of which is incorporated herein by reference.

### FIELD

Example embodiments in the present disclosure generally relate to the field of interface interaction, and in particular, to a method, an apparatus, a device, a readable storage medium, and a product for media content processing.

### BACKGROUND

When a user generates media content on an Internet platform, to enable interaction operations with more users based on media content, an interaction control may be added in the media content, where the interaction control includes an interaction theme or an interactive user, and the like.

### SUMMARY

The embodiments of the present disclosure provides a method, an apparatus, a device, a readable storage medium, and a product for media content processing, and is configured for solving the technical problem that the addition operation of the interaction control in the media content is tedious.

In a first aspect, embodiments of the present disclosure provides a media for content processing method, including: obtaining, in response to a media content generation operation triggered by a first user, media content generated by the first user and associated content corresponding to the media content; obtaining, in response to a preconfigured trigger condition being satisfied, a target interaction theme corresponding to the associated content, the target interaction theme being associated with a preset interaction operation; adding an interaction control corresponding to the target interaction theme in the media content picture to generate interaction media content; and posting the interaction media content to enable a second user to perform the preset interaction operation based on the interaction control in the posted interaction media content to post media content associated with the target interaction theme.

In a second aspect, embodiments of the present disclosure provides an apparatus for media content processing, including: a content obtaining module configured for obtaining media content generated by the first user and associated content corresponding to the media content, in response to a media content generation operation triggered by a first user; a theme obtaining module configured for obtaining, in response to a preconfigured trigger condition being satisfied, a target interaction theme corresponding to the associated content, the target interaction theme being associated with a preset interaction operation; an adding module configured for adding an interaction control corresponding to the target interaction theme in the media content picture to generate interaction media content; and a posting module configured for posting the interaction media content to enable a second user to perform the preset interaction operation based on the interaction control in the posted interaction media content to post media content associated with the target interaction theme.

In a third aspect, embodiments of the present disclosure provide an electronic device, including: a processor and a memory; the memory stores computer-executable instruction; and the processor executes the computer-executable instruction stored in the memory, causing the processor to perform the method for media content processing of the first aspect and possible designs of the first aspect.

In a fourth aspect, embodiment of the present disclosure provides a computer-readable storage medium having a computer program stored thereon, the computer program, when executed by a processor, implementing the method for media content processing of the first aspect and the possible designs of the first aspect.

In a fifth aspect, embodiments of the present disclosure provide a computer program product, including a computer-executable instruction, wherein the computer-executable instruction, when executed by a processor, implements the method for media content processing of the first aspect and various possible designs of the first aspect.

### BRIEF DESCRIPTION OF DRAWINGS

In order to more clearly illustrate the embodiments of the present disclosure or the technical solutions in the prior art, the accompanying drawings used in the description of the embodiments or the prior art will be briefly introduced below. It will be apparent that the drawings in the following description are some embodiments of the present disclosure. Those skilled in the art may also obtain other drawings according to these drawings without creative labor.
FIG. 1 is a schematic flowchart of a method for media content processing according to embodiments of the present disclosure;
FIG. 2 is a schematic diagram of interface interaction according to embodiments of the present disclosure;
FIG. 3 is a schematic flowchart of a method for media content processing according to a further embodiment of the present disclosure;
FIG. 4 is a schematic diagram of a further interface interaction according to embodiments of the present disclosure;
FIG. 5 is a schematic diagram of another interface interaction according to embodiments of the present disclosure;
FIG. 6 is a schematic diagram of another interface interaction according to embodiments of the present disclosure;
FIG. 7 is a schematic flowchart of a method for media content processing according to another embodiment of the present disclosure;
FIG. 8 is a schematic flowchart of an apparatus for media content processing according to embodiments of the present disclosure;
FIG. 9 is a schematic structural diagram of an electronic device according to embodiments of the present disclosure.

### DETAILED DESCRIPTION

In order to make the objectives, technical solutions and advantages of the embodiments of the present disclosure clearer, the technical solutions in the embodiments of the present disclosure will be clearly and completely described below with reference to the accompanying drawings in the embodiments of the present disclosure. All other embodiments obtained by those skilled in the art based on the embodiments of the present disclosure without creative efforts shall fall within the scope of the present disclosure.

The present disclosure provides a method, an apparatus, a device, a readable storage medium, and a product for media content processing.

It is to be noted that the method, the apparatus, the device, the readable storage medium, and the product for media content processing provided in the present disclosure may be applied to any interaction media content generation scenario.

In order to enable the user to perform an interaction operation based on the media content, the current user may add an interaction control to the media content picture according to actual requirements to obtain interaction media content. Therefore, after the interaction media content is posted, when other users browse the interaction media content, the preset interaction operation corresponding to the interaction theme associated with the interaction control can be executed through the triggering operation on the interaction control, and the interaction media content associated with the interaction theme is posted.

In the related art, when the interaction media content is generated, the user needs to perform an editing operation on the interaction control autonomously, to determine content such as an interaction theme and a display parameter corresponding to the interaction control. The operations are cumbersome, resulting in poor user experience.

In order to improve the addition efficiency of the interaction control, after acquiring the media content generated by the user and the associated content corresponding to the media content, it may be detected whether the preconfigured trigger condition is satisfied currently. If so, the target interaction theme may be determined based on the associated content. Based on the target interaction theme, an interaction control associated with the target interaction theme is automatically added to the image of the media content to generate interaction media content. Therefore, the addition of the interaction control can be quickly and conveniently realized in the generated or completed edited media content picture, the generation efficiency of the interaction media content is improved, and the user experience is improved.

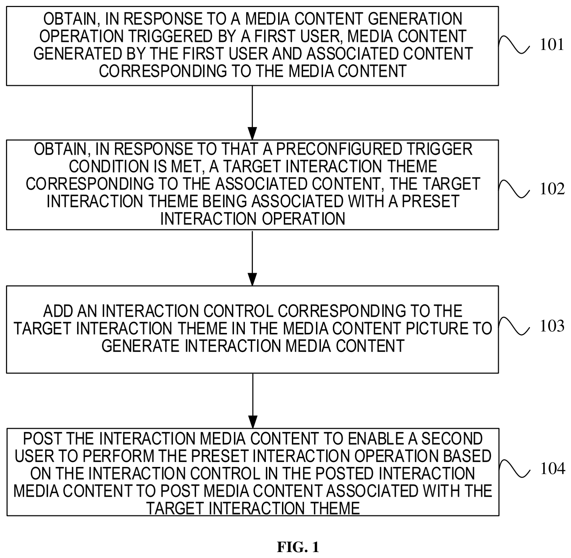

FIG. 1 is a schematic flowchart of a method for media content processing according to embodiments of the present disclosure.

Step 101: obtain, in response to a media content generation operation triggered by a first user, media content generated by the first user and associated content corresponding to the media content.

The execution body of this embodiment is an apparatus for media content processing, and the apparatus for media content processing may be coupled to the terminal device, to generate and post the interaction media content based on a trigger operation of the first user on the terminal device. Optionally, the apparatus for media content processing may alternatively be coupled to a server communicatively connected to the terminal device. Therefore, the media content processing request sent by the terminal device based on the trigger operation of the first user can be obtained, and the interaction media content is generated and posted.

In this embodiment, the first user may generate the media content and post the media content.

Optionally, the first user may trigger the preset media content generation control to trigger the media content generation operation according to the actual requirement. Or, when browsing the media content posted by the second user, the first user may trigger the generation operation of the media content based on the associated content of the media content posted by the second user. For example, the media content posted by the second user is taken based on the target effect determined by the second user, and the first user may initiate the media content generation operation based on the generation control associated with the target effect. Alternatively, the media content posted by the second user is associated with topic content, and the first user may initiate the media content generation operation based on the topic content.

Correspondingly, in response to the media content generation operation triggered by the first user, the media content generated by the first user may be obtained. The media content includes, but is not limited to, video media content, audio media content, image media content, image-text media content, and the like. The first user may implement the generation operation of the media content in a real-time acquisition manner, and/or the first user may also implement the generation operation of the media content in an uploading manner, which is not limited in the present disclosure.

Further, the first user may further generate associated content based on the media content. For example, the associated content may be topic content associated with the media content, and the topic content may describe the media content. Alternatively, the associated content may be effect content associated with the media content, the media content may be captured based on the effect content, and/or the media content uploaded by the first user may be processed based on the effect content. Alternatively, the associated content may be a voting sticker associated with the media content, and the user may perform a voting operation based on the voting sticker.

Step 102: obtain, in response to a preconfigured trigger condition being satisfied, a target interaction theme corresponding to the associated content, the target interaction theme being associated with a preset interaction operation.

In this implementation, after obtaining the media content and the associated content generated by the first user, it may be determined whether a preconfigured trigger condition is satisfied. The trigger condition may be set by the first user according to actual requirements, or may be system default. For example, the trigger condition may be that the associated content corresponds to a preset interaction theme, or the trigger condition may be manually triggered by the user, or the trigger condition may include specific text content and the like in the associated content.

Further, if the preconfigured trigger condition is satisfied currently, the target interaction theme corresponding to the associated content may be obtained. The target interaction theme is associated with a preset interaction operation. For example, the target interaction theme may be "What is dinner today", and the corresponding preset interaction operation may be uploading the media content including dinner and posting the media content.

Step 103: add an interaction control corresponding to the target interaction theme in the media content picture to generate interaction media content.

In this implementation, after the target interaction theme is obtained based on the associated content, the interaction control corresponding to the target interaction theme may be added to the media content picture to generate the interaction media content. The interaction control may have a visualized visual effect, for example, a form of a sticker or the like, and the target interaction theme may be displayed in the interaction control.

Optionally, the display parameter of the interaction control may be preset, where the display parameter includes but is not limited to one or more of a font corresponding to the target interaction theme, a display position of the interaction control, and a display size.

Based on the display parameter discussed above, after the target interaction theme is obtained according to the associated content, an interaction control matching the display parameter may be directly added to the media content image according to the display parameter.

Step 104: post the interaction media content to enable a second user to perform the preset interaction operation based on the interaction control in the posted interaction media content to post media content associated with the target interaction theme.

**In** this implementation, after the interaction media content is generated, the interaction media content may be posted.

Optionally, the display interface may be provided with a posting control, and the first user may trigger the posting control to implement posting operation on the interaction media content.

After the interaction media content is posted, the second user may browse the interaction media content during the media content browsing operation, and perform an interaction operation based on the interaction control in the interaction media content. The second user may perform a preset interaction operation associated with the target interaction theme based on the interaction control, and post the media content associated with the target interaction theme.

For example, after browsing the interaction media content whose target interaction theme is "What is dinner today", the second user may upload the media content including dinner by triggering the interaction control in the interaction media content picture, and generate and post the media content associated with "What is dinner today".

According to the method for media content processing provided in this embodiment, by obtaining the media content generated by the first user and the associated content corresponding to the media content, when the preconfigured trigger condition is currently met, the target interaction theme corresponding to the associated content is obtained, and the interaction control associated with the target interaction theme is added to the media content image to obtain the interaction media content. Therefore, the interaction control can be quickly and conveniently added in the media content, the user does not need to manually add the interaction control, the generation efficiency of the interaction media content is improved, and the user experience is improved.

Optionally, based on any one of the foregoing embodiments, the associated content includes effect content. The obtaining media content generated by the first user includes obtaining content acquired or uploaded by the first user through a media content acquisition page.

In this embodiment, the associated content may be effect content.

Optionally, the media content generated by the first user includes content acquired by the first user through a media content acquisition page. An acquisition control may be preset in the media content acquisition page. After the first user selects the effect content, in response to the trigger operation performed by the first user on the acquisition control, the acquisition operation of the media content may be performed based on the effect content. Alternatively, after the first user completes the acquisition operation of the content, when determining the effect content, the content currently acquired by the first user may be processed based on the effect content to obtain the media content.

Alternatively, the media content generated by the first user includes content uploaded by the first user through the media content acquisition page. The media content acquisition page may be preset with an upload control, and the first user may upload the content in a preset storage path by triggering the upload control. After the first user selects the effect content, the content uploaded by the first user may be processed based on the effect content to obtain the media content.

Further, on the basis of any one of the above embodiments, obtaining, in response to the preconfigured trigger condition being satisfied, the target interaction theme corresponding to the associated content includes:

Determining whether the effect content is associated with a preset interaction theme.

If the effect content is associated with the preset interaction theme, determining the preset interaction theme as the target interaction theme corresponding to the associated content, to add the interaction control corresponding to the target interaction theme to the media content picture.

In this embodiment, the partial effect content may be pre-associated with a preset interaction theme. For example, the target interaction theme associated with the effect applied on a pet may be "show your pet".

In order to implement an automatic addition operation of the interaction control, after the first user selects the effect content, it may be determined whether the effect content is associated with a preset interaction theme. If the effect content is associated with a preset interaction theme, the preset interaction theme may be determined as the target interaction theme corresponding to the associated content, to add the interaction control corresponding to the target interaction theme to the media content image.

For example, if the effect content currently selected by the first user is the effect applied on the pet, the interaction control of the interaction theme of "the pet in the sun" may be added to the media content picture generated by the first user.

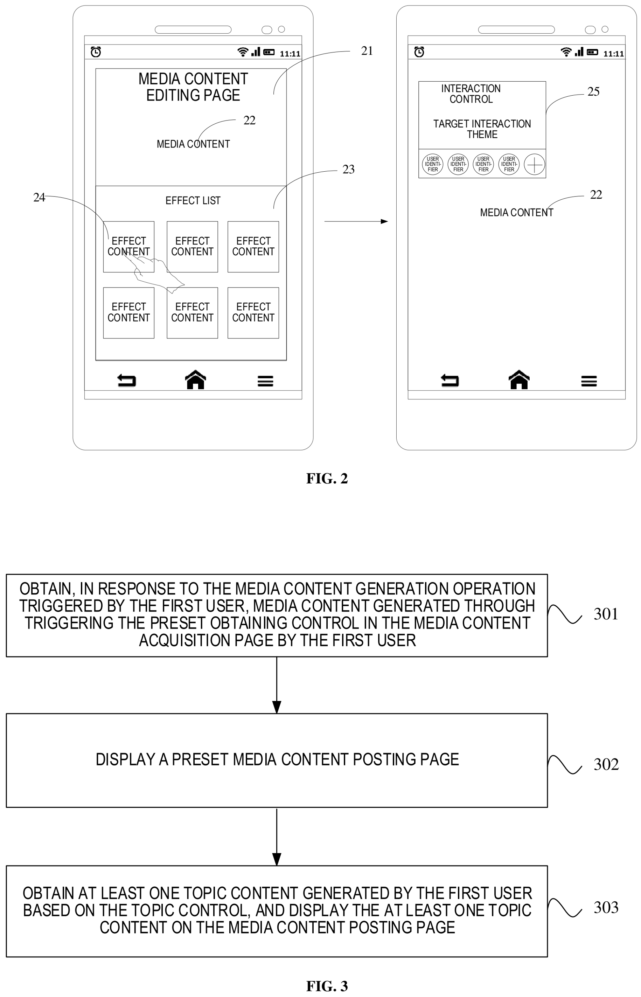

FIG. 2 is a schematic diagram of interface interaction according to embodiments of the present disclosure. As illustrated in FIG. 2, media content 22 and an effect list 23 may be displayed in a media content editing page 21. In response to the trigger operation of the first user on any effect content 24, when the effect content 24 triggered by the first user is associated with the preset interaction theme, the preset interaction theme 24 may be determined as the target interaction theme corresponding to the associated content. The target interaction theme is applied, and an interaction control 25 associated with the target interaction theme is displayed in a picture of the media content 22, where the interaction control 25 displays the target interaction theme.

According to the method for media content processing provided by the embodiment, after the first user generates the media content and the effect content, when it is detected that the effect content is associated with the preset interaction theme, the interaction control is added in the media content picture, so that the addition operation of the interaction control can be automatically realized, and the generation efficiency of the interaction media content is improved.

FIG. 3 is a schematic flowchart of a method for media content processing according to a further embodiment of the present disclosure. Step 101 includes:
Step 301: obtain, in response to the media content generation operation triggered by the first user, media content generated through triggering the preset obtaining control in the media content acquisition page by the first user,
Step 302: display a preset media content posting page which includes a preset topic control, the posting page being configured for editing post information of the media content, and
Step 303: obtain at least one topic content generated by the first user based on the topic control, and displaying the at least one topic content on the media content posting page.

In this embodiment, after the media content is generated, the first user may generate at least one topic content based on the media content to describe the media content. Correspondingly, the associated content may be at least one topic content associated with the media content.

Optionally, in response to the media content generation operation triggered by the first user, the media content generated by the first user by triggering the preset obtaining control in the media content acquisition page may be obtained. The obtaining control includes an acquisition control. The first user may acquire the media content in real time based on the acquisition control. Alternatively, the obtaining control includes an uploading control, and the first user may upload the media content from a preset storage path based on the uploading control.

After obtaining the media content, the preset media content posting page may be displayed. The media content posting page is configured for editing the posting information of the media content. The posting information includes, but is not limited to, content such as a cover, topic content, and title content of the media content to be posted.

Optionally, the media content posting page may include a preset topic control, and in response to the triggering operation performed by the first user on the topic control, at least one topic content may be generated.

For example, the preset topic control may include a plurality of candidate topic controls, and after the user clicks the candidate topic control, the clicked topic may be filled into the text input region of the posting page, and the topic identifier is added, for example, "#". The candidate topic control may include topic text associated with the media content. In response to the trigger operation of the first user for the at least one candidate topic control, at least one topic content may be generated.

For example, the preset topic control may include a topic generation control. After the first user clicks the topic generation control, the topic identifier, for example, "#", may be displayed in the display interface, and the first user may input the topic text after "#" according to the actual requirement, to obtain the topic content. In response to at least one trigger operation of the first user based on the topic generation control, at least one topic content may be generated.

Further, after obtaining the at least one topic content generated by the first user, in order to enable the first user to more intuitively view the currently generated at least one topic content, the at least one topic content may be displayed in the media content posting page.

According to the method for media content processing provided in this embodiment, the media content and the at least one topic content that are generated by the first user are respectively obtained, so that the media content can be described based on the at least one topic content. Therefore, the first user can describe the media content more intuitively.

Further, on the basis of any one of the above embodiments, step 102 includes:
displaying a preset interaction theme generation control on the media content posting page, the interaction theme generation control being configured for adding an interaction control corresponding to the target interaction theme to the media content picture based on the at least one topic content; and
obtaining, in response to a trigger operation from the first user for the interaction theme generation control, the target interaction theme corresponding to the topic content.

In this embodiment, the media content posting page may include a preset interaction theme generation control, and the interaction theme generation control is configured to add an interaction control corresponding to the target interaction theme in the media content picture based on the at least one topic content.

Optionally, the interaction theme generation control may be an adjustable switch, and when the switch is on, an interaction control corresponding to the target interaction theme may be added to the media content picture based on the at least one topic content, and when the switch is in off, an interaction control corresponding to the target interaction theme is not added in the media content picture based on the at least one topic content.

As an implementable manner, the interaction theme generation control may be a control resident on a media content posting page. Alternatively, the interaction theme generation control may also be a control for displaying on the media content posting page when a preset display condition is met.

Further, after displaying the preset interaction theme generation control in the media content posting page, if the trigger operation of the first user on the interaction theme generation control is detected, it may be determined that the preconfigured trigger condition is currently met, and the target interaction theme corresponding to the topic content is obtained.

Further, on the basis of any one of the above embodiments, step 103 includes:
adding, in response to the trigger operation from the first user for the interaction theme generation control, the interaction control corresponding to the target interaction theme to the media content picture based on the at least one topic content to generate the interaction media content.

In this embodiment, after displaying the preset interaction theme generation control in the media content posting page, in response to the trigger operation performed by the first user on the interaction theme generation control, the target interaction theme may be determined based on the at least one topic content. The interaction control corresponding to the target interaction theme is added into the media content picture to generate interaction media content.

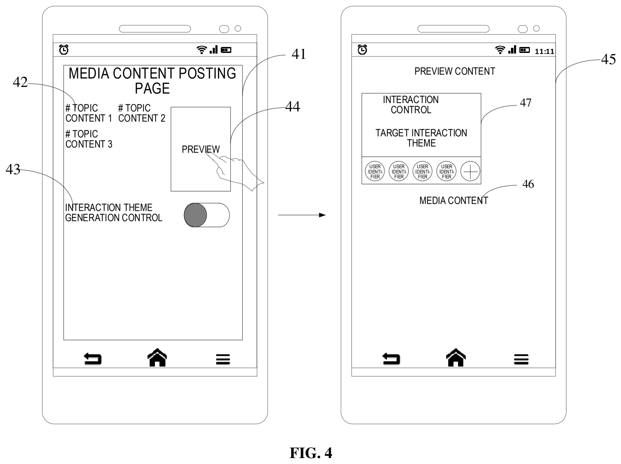

FIG. 4 is a schematic diagram of another interface interaction according to embodiments of the present disclosure, as shown in FIG. 4, at least one topic content 42 generated by a first user may be displayed in an input area of a media content posting page 41, and a preset interaction theme generation control 43 is displayed on the media content posting page 41. In response to the trigger operation performed by the first user on the interaction theme generation control 43, the target interaction theme may be determined based on the at least one topic content 42, and the interaction control associated with the target interaction theme is added to the media content image. In addition, the media content posting page 41 further includes a preset preview control 44. In response to the trigger operation performed by the first user on the preview control 44, the preview content 45 may be displayed, where the preview content 45 includes the media content 46 and the interaction control 47, which is associated with the target interaction theme, and displayed in the picture of the media content 46, where the target interaction theme is displayed in the interaction control 47.

According to the method for media content processing provided in this embodiment, the preset interaction theme generation control is displayed in the media content posting page, so that the first user can determine the target interaction theme based on the at least one topic content based on the trigger operation on the interaction theme generation control, and add the interaction control associated with the target interaction theme to the picture in the media content. Therefore, the media content edited by the posting page can be automatically added, and the user does not need to return the editing page to edit the media content picture. The added interaction control can better fit the topic content generated by the first user, and the user experience is improved.

Further, on the basis of any one of the above embodiments, after the first user performs a trigger operation on the interaction theme generation control, the method further includes:
redirecting to an image editing page in response to a back operation triggered by the first user on the posting page; and
displaying the interaction media content with the interaction control hidden on the image editing page.

In this embodiment, after the first user generates the media content, an image editing page may be displayed, and an editing operation on the media content is implemented in the image editing page. Optionally, the first user may adjust the color information of the media content in the image editing page, clip the media content, add text in the media content picture, add voice, and the like. After the editing operation on the media content is completed, the media content posting page may be entered, and the posting information editing operation may be performed.

Optionally, after the first user performs the trigger operation on the interaction theme generation control in the media content posting page, after adding the interaction control to the media content picture, the first user may also return to the image editing page to edit the media content.

The first user may implement a back operation by triggering a preset gesture on the media content posting page. Alternatively, a back control may be preset in the media content posting page, and the first user may trigger the back control to implement a back operation.

Further, in response to a back operation triggered by the first user on the posting page, the first user may jump to the image editing page. In the image editing page, in order to enable the first user to perform the media content editing operation more intuitively, the blocking of the media content by the interaction control is avoided, and the interaction media content of the hidden interaction control may be displayed on the image editing page.

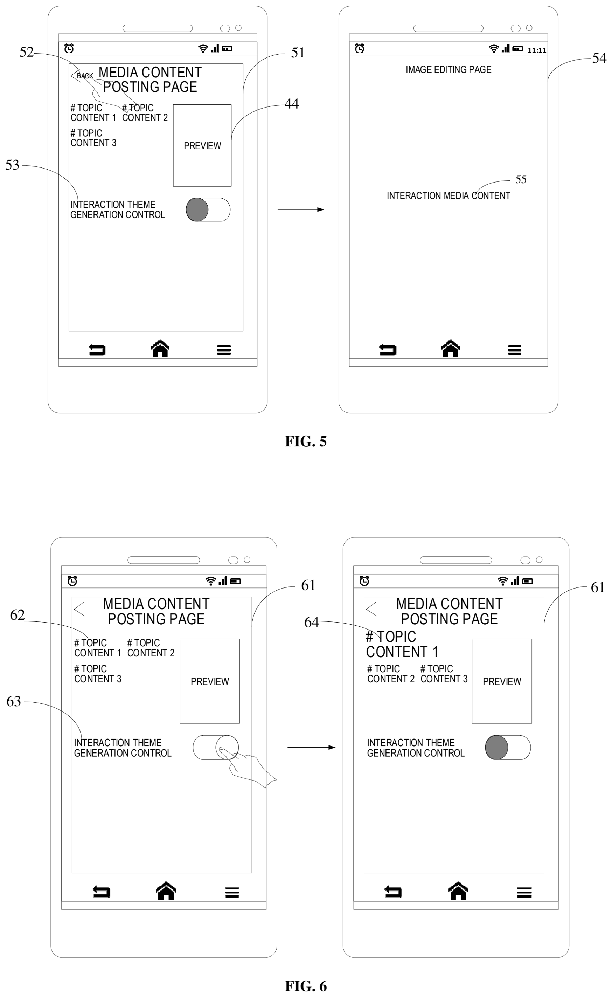

FIG. 5 is a schematic diagram of another interface interaction according to embodiments of the present disclosure, as shown in FIG. 5, a media content posting page 51 includes a preset back control 52, and after the first user performs a trigger operation on an interaction theme generation control 53 in the media content posting page 51, an interaction control may be added to the media content picture. In response to the back operation generated by the first user based on a trigger operation on the back control 52, the image editing page 54 may be redirected to, where the image editing page 54 may display the media content 55, where the screen of the media content 55 does not display the interaction control.

According to the method for media content processing provided in this embodiment, after the interaction control is added to the media content picture, the interaction control is hidden in the image editing page in response to the back operation triggered by the first user, that is, the effect of the media content determined by the user after editing the editing page is saved.

Further, on the basis of any one of the above embodiments, displaying a preset interaction theme generation control in the media content editing page includes:
displaying, in response to detecting that the at least one topic content is generated by the first user based on the topic control, the preset interaction theme generation control on the media content editing page.

In this embodiment, the interaction theme generation control may be a control for displaying on a media content posting page when a preset display condition is met.

Optionally, whether the first user generates at least one topic content based on the topic control may be detected in real time. If the first user generates at least one topic content based on the topic control, the preset interaction theme generation control may be displayed in the media content editing page. On the other hand, the interaction theme generation control may not be displayed.

As an implementation, after the interaction theme generation control is displayed in the media content posting page, in the editing process of the current posting information, the interaction theme generation control no longer disappears.

According to the method for media content processing provided in this embodiment, after detecting that the first user generates the at least one topic content based on the topic control, the preset interaction theme generation control is displayed in the media content editing page, so that after the first user generates the at least one topic content, the interaction control associated with the at least one topic content is quickly added to the media content picture by using the interaction theme generation control, so that the interaction control added in the media content picture is more consistent with the topic content generated by the first user, and the user experience is improved.

Further, on the basis of any one of the foregoing embodiments, determining a target interaction theme corresponding to the topic content in response to a trigger operation performed by the first user on the interaction theme generation control includes:
determining, in response to the trigger operation from the first user for the interaction theme generation control, a target topic content from the at least one topic content; and
determining the target interaction theme corresponding to the target topic content.

In this embodiment, after generating the at least one topic content, in response to the trigger operation performed by the first user on the interaction theme generation control, the target topic content may be determined in the at least one topic content. For example, the first topic content may be determined as the target topic content. Alternatively, the centered topic content may be determined as the target topic content. Alternatively, the topic content with the longest text content may be determined as the target topic content. This is not limited in the present disclosure.

Further, after determining the target topic content, the target interactive topic may be determined based on the target topic content.

As an implementation, an interaction theme consistent with the text content of the target topic content may be determined in a preset interaction theme data set, and the interaction theme is determined as the target interaction theme. Alternatively, the interaction theme with the highest similarity with the text content of the target topic content may be determined in a preset interaction theme data set, and the interaction theme is determined as the target interaction theme. Alternatively, the text content of the target topic content may be directly determined as the target interactive topic, which is not limited in the present disclosure.

According to the method for media content processing provided by the embodiment, the target topic content is determined in the at least one topic content in response to the trigger operation of the first user on the interaction theme generation control, and the target interaction theme corresponding to the target topic content is determined, so that the interaction control added in the media content picture is more related to the topic content generated by the first user, and the user experience is improved.

Further, on the basis of any one of the above embodiments, after in response to the triggering operation of the interaction theme generation control by the first user, the method further includes:
switching a first display parameter corresponding to the target topic content to distinguish the target theme content from further theme content.

The first display parameter includes at least one of a color parameter, a font parameter, or a font size parameter.

In this embodiment, after detecting the trigger operation of the first user on the interaction theme generation control, in order to make it more intuitively for the first user to determine the target topic content associated with the target interaction theme, the first display parameter corresponding to the target topic content may be switched, so that the target topic content is different from other topic content.

The first display parameter includes at least one of a color parameter, a font parameter, and a font size parameter.

For example, before the first user triggers the interaction theme generation control, each topic content may be displayed in a blue font. In response to the trigger operation performed by the first user on the interaction theme generation control, the target topic content may be displayed in an orange font, so that the target topic content is different from other topic content.

FIG. 6 is another schematic diagram of interface interaction according to embodiments of the present disclosure, as illustrated in FIG. 6, in a media content posting page 61, at least one topic content 62 may be displayed with a preset first display parameter. In response to the trigger operation performed by the first user on an interaction theme generation control 63, the first display parameter corresponding to a target topic content 64 may be switched to distinguish the target topic content 64 from other topic content. The target topic content may be the first topic content in the at least one topic content 62, and the first display parameter may be a display size corresponding to the topic content.

According to the method for media content processing provided in this embodiment, by switching the first display parameter corresponding to the target topic content in response to the trigger operation of the first user on the interaction theme generation control, the target topic content can be distinguished from other topic content, so that the first user can intuitively determine the target topic content associated with the target interactive topic.

Further, on the basis of any one of the above embodiments, determining a target interaction theme corresponding to the topic content includes:
determining whether an interaction theme that matches text content in the topic content is present in a preset interaction theme dataset;
if the interaction theme is present in the preset interaction theme dataset, determining the interaction theme as the target interaction theme; and/or
if the interaction theme is absent from the preset interaction theme dataset, creating the target interaction theme based on the text content.

In this embodiment, an interaction theme data set may be preset, and the interaction theme data set may store historical posted and used interaction theme in the platform. When the target interaction theme is determined based on the at least one topic content, whether an interaction theme matching the text content in the topic content exists in the preset interaction theme data set may be determined. If the interaction theme matching the text content in the topic content exists in the preset interaction theme data set, the interaction theme is determined as the target interaction theme.

Optionally, an interaction theme whose text content similarity in the interaction theme data set exceeds a preset threshold may be determined as the target interaction theme. Alternatively, the interaction theme having the highest similarity to the text content in the topic content in the interaction theme data set may be determined as the target interaction theme. Alternatively, the interaction theme whose text content similarity between the interaction theme data set and the text content in the topic content exceeds a preset threshold and the number of historical interactions is the largest may be determined as the target interaction theme, and the present disclosure does not limit the determination of the target interaction theme.

Optionally, if it is detected that there is no interaction theme matching the text content in the topic content in the interaction theme data set, the target interaction theme may be created based on the text content associated with the topic content.

According to the method for media content processing provided by the embodiment, when the interaction theme matched with the text content in the topic content exists in the preset interaction theme data set, the interaction theme is determined as the target interaction theme. When the interaction theme matched with the text content in the topic content exists in the preset interaction theme data set, the target interaction theme is created based on the text content, so that the adding operation of the interaction control can be realized based on any topic content added by the first user.

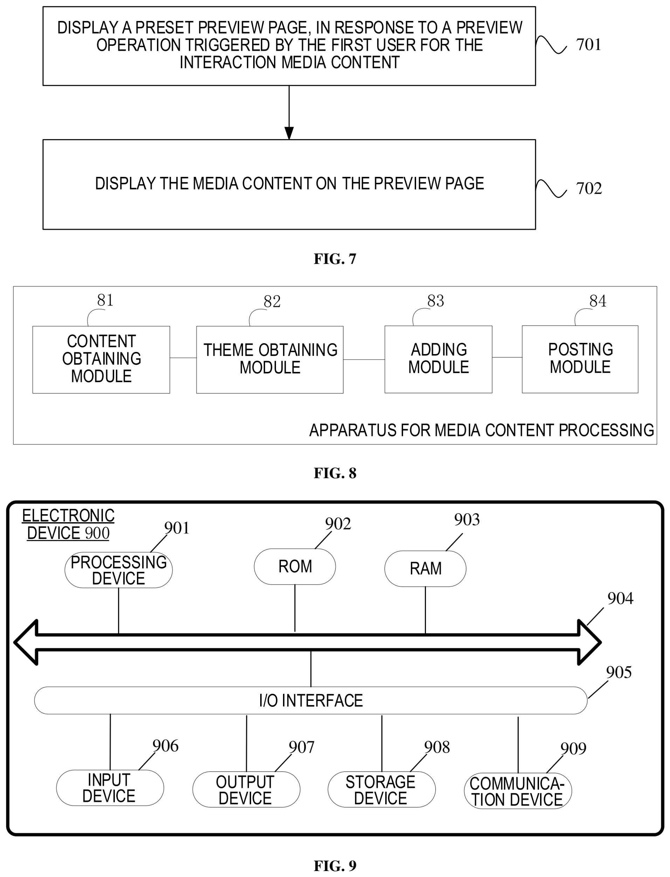

FIG. 7 is a schematic flowchart of a method for media content processing according to another embodiment of the present disclosure. On the basis of any one of the above embodiments, as illustrated in FIG. 7, after the step 103, the method further includes:
Step 701: display a preset preview page in response to a preview operation triggered by the first user for the interaction media content.
Step 702: display the media content on the preview page, and displaying the interaction control in a preset display area of the media content picture, and the interaction control including the target interaction theme.

In this embodiment, after the editing operation on the posting information is completed within the media content posting page, the first user may also perform a preview operation on the currently generated media content, the posting information, and the interaction control.

Optionally, the media content posting page may include a preset preview control, and the first user may implement the preview operation by triggering an operation on the preview control.

Further, in response to the preview operation triggered by the first user for the interaction media content, a preset preview page may be displayed. The media content is displayed in the preview page, and the interaction control is displayed in a preset display area of the media content. The interaction control includes the target interaction theme.

Further, on the basis of any one of the above embodiments, after step 702, the method further includes: obtaining, in response to an editing operation triggered by the first user for the interaction control, edited content determined by the first user; and
performing the editing operation on the interaction control based on the edited content.

In this embodiment, in order to make the interaction control in the media content better fit the personalized requirement of the first user, the first user may also edit the interaction control.

Optionally, the editing content determined by the first user is obtained in response to an editing operation triggered by the first user for the interaction control. The first user may trigger an operation on the interaction control. In response to the trigger operation, an editing page may be displayed, and the first user may generate the editing content in the editing page. Alternatively, the preview page may include a preset editing control, and the first user may trigger an operation on the editing control. In response to the trigger operation, an editing page may be displayed, and the first user may generate the editing content in the editing page.

The editing content includes, but is not limited to, content such as a font parameter of the target interaction theme, a display position of the interaction control, a display size, and transparency.

Further, after the editing content generated by the first user is obtained, an editing operation may be performed on the interaction control based on the editing content.

According to the method for media content processing provided in this embodiment, the preset preview page is displayed in response to the preview operation triggered by the first user for the interaction media content, so that the first user can more intuitively view the currently generated interaction media content in the preview page. In addition, the first user may further adjust the interaction control within the preview page according to actual requirements, so that the generated interaction media content is more consistent with the personalized requirement of the first user, and the user experience is improved.

FIG. 8 is a schematic flowchart of an apparatus for media content processing according to embodiments of the present disclosure, as illustrated in FIG. 8, the apparatus includes: a content obtaining module 81, a theme obtaining module 82, an adding module 83, and a posting module 84. The content obtaining module 81 is configured for obtaining media content generated by the first user and associated content corresponding to the media content, in response to a media content generation operation triggered by a first user. The theme obtaining module 82 is configured for obtaining, in response to a preconfigured trigger condition being satisfied, a target interaction theme corresponding to the associated content, the target interaction theme being associated with a preset interaction operation. The adding module 83 is configured for adding an interaction control corresponding to the target interaction theme in the media content picture to generate interaction media content. The posting module 84 is configured for posting the interaction media content to enable a second user to perform the preset interaction operation based on the interaction control in the posted interaction media content to post media content associated with the target interaction theme.

Further, on the basis of any one of the foregoing embodiments, the associated content includes effect content. The obtaining media content generated by the first user includes obtaining content acquired or uploaded by the first user through a media content acquisition page.

Further, on the basis of any one of the above embodiments, the theme obtaining module 82 is configured for: determining whether the effect content is associated with a preset interaction theme. If the effect content is associated with the preset interaction theme, the preset interaction theme is determined as the target interaction theme corresponding to the associated content, to add the interaction control corresponding to the target interaction theme to the media content picture.

Further, on the basis of any one of the foregoing embodiments, the associated content includes topic content. The content obtaining module is configured for: obtaining, in response to the media content generation operation triggered by the first user, media content generated through triggering the preset obtaining control in the media content acquisition page by the first user. A preset media content posting page is displayed, which includes a preset topic control, the posting page being configured for editing post information of the media content. At least one topic content generated by the first user based on the topic control is obtained, and the at least one topic content on the media content posting page is displayed.

Further, on the basis of any one of the foregoing embodiments, the theme obtaining module 82 is configured for: displaying a preset interaction theme generation control in the media content posting page. The interaction theme generation control is configured for adding an interaction control corresponding to the target interaction theme in the media content picture based on the at least one piece of theme content. In response to the trigger operation performed by the first user on the interaction theme generation control, a target interaction theme corresponding to the topic content is obtained.

Further, on the basis of any one of the above embodiments, the adding module is configured for: adding, in response to a trigger operation performed by the first user on the interaction theme generation control, an interaction control corresponding to the target interaction theme in the media content picture based on the at least one piece of topic content to generate interaction media content.

Further, on the basis of any one of the above embodiments, the apparatus further includes: a redirecting module configured for redirecting to the image editing page in response to a back operation triggered by the first user on the posting page. A hiding module configured to display the interaction media content on the image editing page with the interaction control hidden.

Further, on the basis of any one of the above embodiments, the theme obtaining module 82 is configured for: after detecting that the first user generates at least one piece of topic content based on the topic control, displaying a preset interaction theme generation control in the media content editing page.

Further, on the basis of any one of the foregoing embodiments, the theme obtaining module 82 is configured for: determining, in response to a trigger operation performed by the first user on the interaction theme generation control, target topic content in the at least one piece of topic content.

The target interaction theme corresponding to the target topic content is determined.

Further, on the basis of any one of the foregoing embodiments, the theme obtaining module 82 is configured for: switching a first display parameter corresponding to the target topic content to distinguish the target theme content from further theme content. The first display parameter includes at least one of a color parameter, a font parameter, and a font size parameter.

Further, on the basis of any one of the above embodiments, the theme obtaining module 82 is configured for determining whether an interaction theme that matches text content in the topic content is present in a preset interaction theme dataset. If the interaction theme is present in the preset interaction theme dataset, determining the interaction theme as the target interaction theme, and/or if the interaction theme is absent from the preset interaction theme dataset, creating the target interaction theme based on the text content.

Further, on the basis of any one of the above embodiments, the apparatus further includes: a display module configured for displaying a preset preview page in response to a preview operation triggered by the first user for the interaction media content, . A processing module configured for displaying the media content on the preview page, and displaying the interaction control in a preset display area of the media content picture, and the interaction control including the target interaction theme.

Further, on the basis of any one of the foregoing embodiments, the apparatus further includes: a content obtaining module configured for obtaining edited content determined by the first user, in response to an editing operation triggered by the first user for the interaction control. An editing module configured for performing the editing operation on the interaction control based on the edited content.

The device provided in this embodiment may be configured to perform the technical solutions in the foregoing method embodiments, and implementation principles and technical effects thereof are similar, and details are not described herein again in this embodiment.

In order to implement the foregoing embodiments, an embodiment of the present disclosure further provides an electronic device, including: a processor and a memory.

The memory stores computer-executable instructions.

The processor executes the computer-executable instruction stored in the memory, causing the processor to perform the method for media content processing of any one of the foregoing embodiments.

FIG. 9 is a schematic structural diagram of an electronic device according to embodiments of the present disclosure. The terminal device may include, but is not limited to, a mobile terminal such as a mobile phone, a notebook computer, a digital broadcast receiver, a personal digital assistant (PDA), a tablet computer (PAD), a portable multimedia player (PMP), an in-vehicle terminal (for example, an in-vehicle navigation terminal), and a fixed terminal such as a digital TV, a desktop computer, or the like. The electronic device shown in FIG. 9 is merely an example, and should not impose any limitation on the functions and scope of use of the embodiments of the present disclosure.

As shown in FIG. 9, the electronic device 900 may include a processing device (for example, a central processing unit, a graphics processor, etc.) 901, which may perform various appropriate actions and processing according to a program stored in a read only memory (ROM) 902 or a program loaded into a random access memory (RAM) 903 from a storage device 908. In the RAM 903, various programs and data required by the operation of the electronic device 900 are also stored. The processing device 901, the ROM 902, and the RAM 903 are connected to each other through a bus 904. Input / output (I / O) interface 905 is also connected to bus 904.

Generally, the following devices may be connected to the I / O interface 905: an input device 906 including, for example, a touch screen, a touch pad, a keyboard, a mouse, a camera, a microphone, an accelerometer, a gyroscope, etc. ; an output device 907 including, for example, a liquid crystal display (LCD), a speaker, a vibrator, etc. ; a storage device 908 including, for example, a magnetic tape, a hard disk, etc. ; and a communication device 909. The communication device 909 may allow the electronic device 900 to communicate wirelessly or wired with other devices to exchange data. While FIG. 9 shows an electronic device 900 having various devices, it should be understood that it is not required to implement or have all illustrated devices. More or fewer devices may alternatively be implemented or provided.

In particular, according to an embodiment of the present disclosure, the process described above with reference to the flowchart may be implemented as a computer software program. For example, embodiments of the present disclosure include a computer program product including a computer program embodied on a computer readable medium, the computer program including program code for performing the method shown in the flowchart. In such embodiments, the computer program may be downloaded and installed from the network through the communication device 909, or installed from the storage device 908, or from the ROM 902. When the computer program is executed by the processing apparatus 901, the foregoing functions defined in the method of the embodiments of the present disclosure are performed.

It is to be noted that the computer-readable medium described above may be a computer readable signal medium, a computer readable storage medium, or any combination of the foregoing two. The computer-readable storage medium may be, for example, but not limited to, an electrical, magnetic, optical, electromagnetic, infrared, or semiconductor system, device, or device, or any combination thereof. More specific examples of computer-readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus, or device. In the present disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted with any suitable medium, including, but not limited to: wires, optical cables, RF (radio frequency), and the like, or any suitable combination of the foregoing.

In order to implement the foregoing embodiments, an embodiment of the present disclosure further provides a computer-readable storage medium, where the computer-readable storage medium stores a computer-executable instruction, and when the processor executes the computer-executable instruction, the media content processing method according to any one of the foregoing embodiments is implemented.

In order to implement the foregoing embodiments, an embodiment of the present disclosure further provides a computer program product, including a computer program, where the computer program, when executed by a processor, implements the media content processing method according to any one of the foregoing embodiments.

The computer-readable medium described above may be included in the electronic device; or may be separately present without being assembled into the electronic device.

The computer-readable medium carries one or more programs, and when the one or more programs are executed by the electronic device, the electronic device is enabled to perform the method shown in the foregoing embodiments.

Computer program code for performing the operations of the present disclosure may be written in one or more programming languages, including object oriented programming languages, such as Java, Smalltalk, C + +, and conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (for example, using an Internet service provider for Internet connection).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and / or flowcharts, as well as combinations of blocks in the block diagrams and / or flowcharts, may be implemented with a dedicated hardware-based system that performs the specified functions or operations, or may be implemented in a combination of dedicated hardware and computer instructions.

The units involved in the embodiments of the present disclosure may be implemented in software, or may be implemented in hardware. For example, the first obtaining unit may be further described as "obtaining at least two units of Internet Protocol addresses".

The functions described above may be performed, at least in part, by one or more hardware logic components. For example, without limitation, example types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, devices, or devices, or any suitable combination of the foregoing. More specific examples of machine-readable storage media may include electrical connections based on one or more lines, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

According to a first aspect, a media content processing method is provided according to one or more embodiments of the present disclosure, including:
obtaining, in response to a media content generation operation triggered by a first user, media content generated by the first user and associated content corresponding to the media content;
obtaining, in response to a preconfigured trigger condition being satisfied, a target interaction theme corresponding to the associated content, the target interaction theme being associated with a preset interaction operation;
adding an interaction control corresponding to the target interaction theme in the media content picture to generate interaction media content; and
posting the interaction media content to enable a second user to perform the preset interaction operation based on the interaction control in the posted interaction media content to post media content associated with the target interaction theme.

According to one or more embodiments of the present disclosure, the associated content includes effect content; and the obtaining media content generated by the first user includes obtaining content acquired or uploaded by the first user via a media content acquisition page.

According to one or more embodiments of the present disclosure, obtaining, in response to the preconfigured trigger condition being satisfied, the target interaction theme corresponding to the associated content includes:
determining whether the effect content is associated with a preset interaction theme; and
If the effect content is associated with the preset interaction theme, determining the preset interaction theme as the target interaction theme corresponding to the associated content, to add the interaction control corresponding to the target interaction theme to the media content picture.

According to one or more embodiments of the present disclosure, the associated content includes topic content;
obtaining, in response to the media content generation operation triggered by the first user, the media content generated by the first user and the associated content corresponding to the media content includes:
obtaining, in response to the media content generation operation triggered by the first user, media content generated through triggering the preset obtaining control in the media content acquisition page by the first user;
displaying a preset media content posting page which includes a preset topic control, the posting page being configured for editing post information of the media content; and
obtaining at least one topic content generated by the first user based on the topic control, and displaying the at least one topic content on the media content posting page.

According to one or more embodiments of the present disclosure, determining a target interaction theme corresponding to the associated content in response to satisfying a preconfigured trigger condition includes:
displaying a preset interaction theme generation control on the media content posting page, the interaction theme generation control being configured for adding an interaction control corresponding to the target interaction theme to the media content picture based on the at least one topic content; and
obtaining, in response to a trigger operation from the first user for the interaction theme generation control, the target interaction theme corresponding to the topic content.

According to one or more embodiments of the present disclosure, adding the interaction control corresponding to the target interaction theme in the media content picture to generate interaction media content includes:
adding, in response to the trigger operation from the first user for the interaction theme generation control, the interaction control corresponding to the target interaction theme to the media content picture based on the at least one topic content to generate the interaction media content.

According to one or more embodiments of the present disclosure, after the first user performs a trigger operation on the interaction theme generation control, the method further includes:
redirecting to an image editing page in response to a back operation triggered by the first user on the posting page; and
displaying the interaction media content with the interaction control hidden on the image editing page.

According to one or more embodiments of the present disclosure, displaying the preset interaction theme generation control in the media content editing page includes:
displaying, in response to detecting that the at least one topic content is generated by the first user based on the topic control, the preset interaction theme generation control on the media content editing page.

According to one or more embodiments of the present disclosure, obtaining, in response to the trigger of the first user on the interaction theme generation control, the target interaction theme corresponding to the topic content includes:
determining, in response to the trigger operation from the first user for the interaction theme generation control, a target topic content from the at least one topic content; and
determining the target interaction theme corresponding to the target topic content.

According to one or more embodiments of the present disclosure, the method further includes: after in response to the triggering operation of the interaction theme generation control by the first user,
switching a first display parameter corresponding to the target topic content to distinguish the target theme content from further theme content.

The first display parameter includes at least one of a color parameter, a font parameter, and a font size parameter.

According to one or more embodiments of the present disclosure, determining the target interaction theme corresponding to the topic content includes:
determining whether an interaction theme that matches text content in the topic content is present in a preset interaction theme dataset;
if the interaction theme is present in the preset interaction theme dataset, determining the interaction theme as the target interaction theme; and/or
if the interaction theme is absent from the preset interaction theme dataset, creating the target interaction theme based on the text content.

According to one or more embodiments of the present disclosure, the method further includes: after adding the interaction control corresponding to the target interaction theme in the media content picture to generate the interaction media content,
displaying a preset preview page in response to a preview operation triggered by the first user for the interaction media content; and
displaying the media content on the preview page, and displaying the interaction control in a preset display area of the media content picture, and the interaction control including the target interaction theme.

According to one or more embodiments of the present disclosure, after the displaying the interaction control according to the preset second display parameter in the preset display area, the method further includes:
obtaining, in response to an editing operation triggered by the first user for the interaction control, edited content determined by the first user; and
performing the editing operation on the interaction control based on the edited content.

According to a second aspect, an apparatus for media content processing is provided according to one or more embodiments of the present disclosure, including:
a content obtaining module configured for obtaining media content generated by the first user and associated content corresponding to the media content, in response to a media content generation operation triggered by a first user;
a theme obtaining module configured for obtaining, in response to a preconfigured trigger condition being satisfied, a target interaction theme corresponding to the associated content, the target interaction theme being associated with a preset interaction operation;
an adding module configured for adding an interaction control corresponding to the target interaction theme in the media content picture to generate interaction media content; and
a posting module configured for posting the interaction media content to enable a second user to perform the preset interaction operation based on the interaction control in the posted interaction media content to post media content associated with the target interaction theme.

According to one or more embodiments of the present disclosure, the associated content includes effect content; and obtaining the media content generated by the first user includes obtaining content acquired or uploaded by the first user via a media content acquisition page.

According to one or more embodiments of the present disclosure, the theme obtaining module is configured for:
determining whether the effect content is associated with a preset interaction theme; and
if the effect content is associated with the preset interaction theme, determining the preset interaction theme as the target interaction theme corresponding to the associated content, to add the interaction control corresponding to the target interaction theme to the media content picture.

According to one or more embodiments of the present disclosure, the associated content includes topic content.

The content obtaining module is configured for:
obtaining, in response to the media content generation operation triggered by the first user, media content generated through triggering the preset obtaining control in the media content acquisition page by the first user;
displaying a preset media content posting page which includes a preset topic control, the posting page being configured for editing post information of the media content; and
obtaining at least one topic content generated by the first user based on the topic control, and displaying the at least one topic content on the media content posting page.

According to one or more embodiments of the present disclosure, the theme obtaining module is configured for:
displaying a preset interaction theme generation control on the media content posting page, the interaction theme generation control being configured for adding an interaction control corresponding to the target interaction theme to the media content picture based on the at least one topic content; and
obtaining, in response to a trigger operation from the first user for the interaction theme generation control, the target interaction theme corresponding to the topic content.

According to one or more embodiments of the present disclosure, the adding module is configured for:
adding, in response to the trigger operation from the first user for the interaction theme generation control, the interaction control corresponding to the target interaction theme to the media content picture based on the at least one topic content to generate the interaction media content.

According to one or more embodiments of the present disclosure, the apparatus further includes:
A redirecting module configured for redirecting to an image editing page in response to a back operation triggered by the first user on the posting page;
A hiding module configured for displaying the interaction media content with the interaction control hidden on the image editing page.

According to one or more embodiments of the present disclosure, the theme obtaining module is configured for:
displaying, in response to detecting that the at least one topic content is generated by the first user based on the topic control, the preset interaction theme generation control on the media content editing page.

According to one or more embodiments of the present disclosure, the theme obtaining module is configured for:
obtaining, in response to the trigger operation from the first user for the interaction theme generation control, a target topic content from the at least one topic content; and
obtaining the target interaction theme corresponding to the target topic content.

According to one or more embodiments of the present disclosure, the theme obtaining module is configured for:
switching a first display parameter corresponding to the target topic content to distinguish the target theme content from further theme content.

The first display parameter includes at least one of a color parameter, a font parameter, and a font size parameter.

According to one or more embodiments of the present disclosure, the determining module is configured for:
determining whether an interaction theme that matches text content in the topic content is present in a preset interaction theme dataset;
if the interaction theme is present in the preset interaction theme dataset, determining the interaction theme as the target interaction theme; and/or
if the interaction theme is absent from the preset interaction theme dataset, creating the target interaction theme based on the text content.

According to one or more embodiments of the present disclosure, the apparatus further includes:
A display module configured for, displaying a preset preview page in response to a preview operation triggered by the first user for the interaction media content;
A processing module configured for displaying the media content on the preview page, and displaying the interaction control in a preset display area of the media content picture, and the interaction control including the target interaction theme.

According to one or more embodiments of the present disclosure, the apparatus further includes:
A content obtaining module configured for, obtaining, in response to an editing operation triggered by the first user for the interaction control, edited content determined by the first user;
An editing module configured for performing the editing operation on the interaction control based on the edited content.

According to a third aspect, an electronic device is provided according to one or more embodiments of the present disclosure, including: at least one processor and a memory;
the memory stores computer-executable instruction; and
the processor executes the computer-executable instruction stored in the memory, causing the processor to perform the method for media content processing of the first aspect and various possible designs of the first aspect.

According to a fourth aspect, a computer-readable storage medium is provided according to one or more embodiments of the present disclosure. The computer-readable storage medium having a computer program stored thereon, wherein the computer program, when executed by a processor, implements the method for media content processing of the first aspect and various possible designs of the first aspect.

According to a fifth aspect, a computer program product is provided, including a computer program, where the computer-executable instruction, when executed by a processor, implements the method for media content processing of the first aspect and various possible designs of the first aspect.

The above description is merely an illustration of the preferred embodiments of the present disclosure and the principles of the applied technology. It should be understood by those skilled in the art that the disclosure in the present disclosure is not limited to the technical solutions of the specific combination of the above technical features, and should also cover other technical solutions formed by any combination of the above technical features or their equivalent features without departing from the above disclosed concept. For example, the above features are the technical solutions formed by mutually replacing technical features disclosed in the present disclosure (but not limited to).

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and / or methodological acts, it is to be understood that the subject matter defined in the appended claims is not necessarily limited to the specific features or acts described above. Rather, the specific features and acts described above are merely illustrative forms of implementing the claims.

## Claims

1. A method for media content processing, comprising:
obtaining, in response to a media content generation operation triggered by a first user, media content generated by the first user and associated content corresponding to the media content;
obtaining, in response to a preconfigured trigger condition being satisfied, a target interaction theme corresponding to the associated content, the target interaction theme being associated with a preset interaction operation;
adding an interaction control corresponding to the target interaction theme in the media content picture to generate interaction media content; and
posting the interaction media content to enable a second user to perform the preset interaction operation based on the interaction control in the posted interaction media content to post media content associated with the target interaction theme.

2. The method of claim 1, wherein the associated content comprises effect content, and obtaining the media content generated by the first user comprises: obtaining content acquired or uploaded by the first user via a media content acquisition page.

3. The method of claim 2, wherein obtaining, in response to the preconfigured trigger condition being satisfied, the target interaction theme corresponding to the associated content comprises:
determining whether the effect content is associated with a preset interaction theme; and
in accordance with a determination that the effect content is associated with the preset interaction theme, determining the preset interaction theme as the target interaction theme corresponding to the associated content, to add the interaction control corresponding to the target interaction theme to the media content picture.

4. The method of claim 1, wherein the associated content comprises topic content; and
obtaining, in response to the media content generation operation triggered by the first user, the media content generated by the first user and the associated content corresponding to the media content comprises:
obtaining, in response to the media content generation operation triggered by the first user, media content generated through triggering the preset obtaining control in the media content acquisition page by the first user;
displaying a preset media content posting page which comprises a preset topic control, the posting page being configured for editing post information of the media content; and
obtaining at least one topic content generated by the first user based on the topic control, and displaying the at least one topic content on the media content posting page.

5. The method of claim 4, wherein obtaining, in response to a preconfigured trigger condition being satisfied, the target interaction theme corresponding to the associated content comprises:
displaying a preset interaction theme generation control on the media content posting page, the interaction theme generation control being configured for adding an interaction control corresponding to the target interaction theme to the media content picture based on the at least one topic content; and
obtaining, in response to a trigger operation from the first user for the interaction theme generation control, the target interaction theme corresponding to the topic content.

6. The method of claim 5, wherein adding the interaction control corresponding to the target interaction theme in the media content picture to generate the interaction media content comprises:
adding, in response to the trigger operation from the first user for the interaction theme generation control, the interaction control corresponding to the target interaction theme to the media content picture based on the at least one topic content to generate the interaction media content.

7. The method of claim 5, wherein the method further comprises: after the trigger operation from first user for the interaction theme generation control,
redirecting to an image editing page in response to a back operation triggered by the first user on the posting page; and
displaying the interaction media content with the interaction control hidden on the image editing page.

8. The method of claim 5, wherein displaying the preset interaction theme generation control on the media content posting page comprises:
displaying, in response to detecting that the at least one topic content is generated by the first user based on the topic control, the preset interaction theme generation control on the media content editing page.

9. The method of claim 5, wherein obtaining, in response to the trigger of the first user on the interaction theme generation control, the target interaction theme corresponding to the topic content comprises:
obtaining, in response to the trigger operation from the first user for the interaction theme generation control, a target topic content from the at least one topic content; and
obtaining the target interaction theme corresponding to the target topic content.

10. The method of claim 9, wherein the method further comprises: after in response to the triggering operation of the interaction theme generation control by the first user,
switching a first display parameter corresponding to the target topic content to distinguish the target theme content from further theme content;
wherein the first display parameter comprises at least one of a color parameter, a font parameter, or a font size parameter.

11. The method of claim 5, wherein obtaining the target interaction theme corresponding to the topic content comprises:
determining whether an interaction theme that matches text content in the topic content is present in a preset interaction theme dataset;
determining the interaction theme as the target interaction theme, if the interaction theme is present in the preset interaction theme dataset; and/or
creating the target interaction theme based on the text content, if the interaction theme is absent from the preset interaction theme dataset.

12. The method of any of claims 1 to 11, wherein the method further comprises: after adding the interaction control corresponding to the target interaction theme in the media content picture to generate the interaction media content,
displaying a preset preview page, in response to a preview operation triggered by the first user for the interaction media content; and
displaying the media content on the preview page, and displaying the interaction control in a preset display area of the media content picture, and the interaction control comprising the target interaction theme.

13. The method of claim 12, wherein the method further comprises: after displaying the interaction control in the preset display area according to a preset second display parameter,
obtaining, in response to an editing operation triggered by the first user for the interaction control, edited content determined by the first user; and
performing the editing operation on the interaction control based on the edited content.

14. An apparatus for media content processing, comprising:
a content obtaining module configured for obtaining media content generated by the first user and associated content corresponding to the media content, in response to a media content generation operation triggered by a first user;
a theme obtaining module configured for obtaining, in response to that a preconfigured trigger condition is met, a target interaction theme corresponding to the associated content, the target interaction theme being associated with a preset interaction operation;
an adding module configured for adding an interaction control corresponding to the target interaction theme in the media content picture to generate interaction media content; and
a posting module configured for posting the interaction media content to enable a second user to perform the preset interaction operation based on the interaction control in the posted interaction media content to post media content associated with the target interaction theme.

15. The apparatus of claim 14, wherein the associated content comprising effect content, and the content obtaining module is further configured for obtaining the media content generated by the first user comprises: obtaining content acquired or uploaded by the first user via a media content acquisition page.

16. The apparatus of claim 15, wherein the theme obtaining module is further configured for:
determining whether the effect content is associated with a preset interaction theme; and
in accordance with a determination that the effect content is associated with the preset interaction theme, determining the preset interaction theme as the target interaction theme corresponding to the associated content, to add the interaction control corresponding to the target interaction theme to the media content picture.

17. The apparatus of claim 14, wherein the associated content comprises topic content, and the content obtaining module is further configured for:
in response to the media content generation operation triggered by the first user, obtaining media content generated through triggering the preset obtaining control in the media content acquisition page by the first user;
displaying a preset media content posting page which comprises a preset topic control, the posting page being configured for editing post information of the media content; and
obtaining at least one topic content generated by the first user based on the topic control, and displaying the at least one topic content on the media content posting page.

18. An electronic device, comprising: a processor and memory;
the memory stores computer-executable instruction; and
the processor executes the computer-executable instruction stored in the memory, causing the processor to perform the method for media content processing of any of claims 1 to 13.

19. A computer-readable storage medium having a computer program stored thereon, wherein the computer program, when executed by a processor, implements the method for media content processing of any of claims 1 to 13.

20. A computer program product comprising a computer-executable instruction, wherein the computer-executable instruction, when executed by a processor, implements the method for media content processing of any of claims 1 to 13.
